# EUROPEAN PATENT SPECIFICATION

(11) **EP 3 819 170 B1**
(45) Date of publication and mention of the grant of the patent: **18.09.2024**
(21) Application number: 19208076.0
(22) Date of filing: 08.11.2019
(51) Int. Cl.: B60R 11/00, B60N 3/00, B60R 7/04, B60N 3/10

(54) **AN IMPROVED VEHICLE CENTER CONSOLE INCLUDING A TABLE**
VERBESSERTE FAHRZEUGMITTELKONSOLE MIT EINEM TISCH
CONSOLE CENTRALE DE VÉHICULE AMÉLIORÉE COMPRENANT UNE TABLE

(43) Date of publication of application: 12.05.2021
(73) Proprietor: Volvo Car Corporation, 40531 Göteborg (SE)
(72) Inventor: PALM, Niklas, 412 53 Göteborg (SE); GÖTHLIN, Jonas, 423 43 Torslanda (SE)
(74) Representative: Kransell & Wennborg KB

(56) References cited:
- DE-U1- 202018 104 293
- FR-A1- 3 095 387
- US-A- 5 284 314

## Description

### TECHNICAL FIELD

The present invention generally relates to a vehicle center console including a planar component for placing items thereon.

### BACKGROUND

Vehicle interior design and functionality aim to provide for a visually appealing interior for vehicle occupants travelling with the vehicle while at the same time enhancing the experience by providing assisting and entertaining functions. For example, speakers may be integrated in the vehicle in a design-oriented way while at the same time providing audio functions for the infotainment system of the vehicle.

Another area of importance for the vehicle interior is ergonomics, i.e. to make travelling with the vehicle comfortable for the occupants. For example, it is often desirable for vehicle occupants to be able to rest his/her arm on an arm rest. Such arm rest may for example be included in the vehicle door panels. Further, US5284314 discloses a dual mug and cup holder accessible from an armrest.

In addition, an often-sought-after function is the ability to place items on a dedicated support surface, i.e. a table. Such items may include food items, electronics, books, etc. It has proven difficult to combine the ergonomics aspect with adequate support surfaces for items.

### SUMMARY

The disclosed subject matter generally relates to a vehicle center console comprising a fixed top structure providing an arm rest for vehicle occupants, and at least one planar component adapted to support items placed thereon. The proposed vehicle center console provides the planar component for the vehicle occupant without compromising the ergonomics provided by the fixed top structure providing the arm rest for the vehicle occupant.

The fixed top structure advantageously provides for an arm rest for the occupant that can be designed in nearly any desired shape as long as it is fixed. The fixed top structure advantageously allows for the at least one planar component to slide with respect to the fixed top structure into a stowed position below the fixed top structure, and to slide to a use position such that an item is placeable on a substantially planar surface of the planar component.

With regards to the above, the inventors propose a vehicle center console comprising a fixed top structure providing an arm rest for vehicle occupants. The proposed center console also comprises at least one planar component adapted to support items placed thereon. The planar component includes a substantially planar surface for receiving the items, wherein the planar component is slidably attached to a guide structure to allow for the planar component to slide in under the fixed top structure when in a stowed position, and to slide out from the stowed position such that the substantially planar surface is exposed.

Advantageously, a further planar component is included in the vehicle center console. The inventors thus also propose that the planar component is a first planar component, the vehicle center console comprising a second planar component adapted to support items placed thereon. The second planar component includes a substantially planar surface for receiving the items, wherein the second planar component is slidably attached to a guide structure to allow for the second planar component to slide in under the fixed top structure when in a stowed position, and to slide out from the stowed position such that the substantially planar surface is exposed.

For example, the first planar component may provide a slidable planar component for occupants in the front seats and the second planar component may provide a slidable planar component for occupants in the rear seats. Thus, the proposed vehicle center console may provide improved ergonomics for vehicle occupants in the front seats by means of the fixed top structure that provides an arm rest. At the same time as providing the improved ergonomics, the proposed vehicle center console may provide improved planar components for the vehicle occupants in the front seats and in the rear seats. The fixed top structure may be clean of any pockets, storage compartments, or other functional structures to thereby be adapted primarily as an arm rest.

Further features of, and advantages with, the embodiments of the present invention will become apparent when studying the appended claims and the following description. The skilled person realize that different features of the present invention may be combined to create embodiments other than those described in the following, without departing from the scope of the present invention.

### BRIEF DESCRIPTION OF DRAWINGS

These and other aspects of the present invention will now be described in more detail, with reference to the appended drawings showing example embodiments of the invention, wherein:
FIG. 1 is a conceptual illustration of a vehicle center console according to embodiments not being part of the invention;
FIG. 2A is a conceptual illustration of a vehicle center console according to embodiments of the present invention;
FIG. 2B is an exploded view of the vehicle center console shown in fig. 2A;
FIG. 3A is a conceptual illustration of a vehicle center console with planar components in use positions according to embodiments of the present invention;
FIG. 3B is a conceptual illustration of a vehicle center console with planar components in stowed positions according to embodiments of the present invention;
FIG. 3C is an exploded view of the vehicle center console shown in figs. 3A-B;
FIG. 4 conceptually illustrates a top view of a vehicle center console having a electronics unit installed therein according to embodiments of the present invention;
FIG. 5 is a schematic side view of a vehicle center console according to embodiments of the present invention;
FIG. 6 conceptually illustrates an example sliding mechanism according to embodiments of the present invention; and
FIG. 7 conceptually illustrates a vehicle center console included in a vehicle interior according to embodiments of the present invention.

### DETAILED DESCRIPTION

In the present detailed description, various embodiments of a vehicle center console according to the present invention are described. Like reference characters refer to like elements throughout.

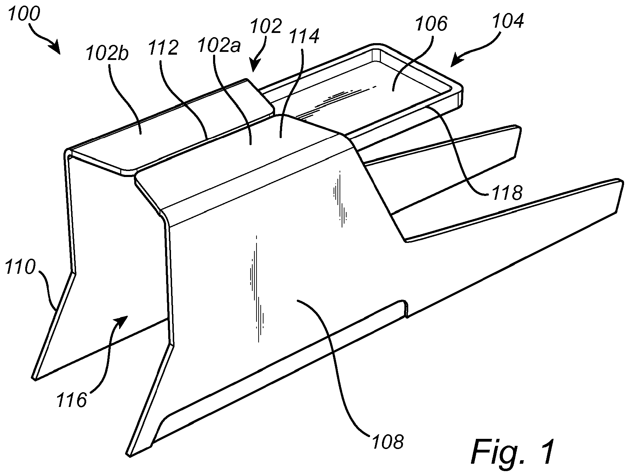

Fig. 1 conceptually illustrates vehicle center console 100 according to embodiments not forming part of the invention. The vehicle center console 100 comprises a fixed top structure 102 providing an arm rest for vehicle occupants. Further, the vehicle center console 100 comprises at least one planar component 104 comprising a substantially planar surface 106 adapted to be substantially horizontal when the vehicle center console 100 is mounted in a vehicle. The planar component 104 is slidably attached to a guide structure to allow for the planar component 104 to slide in under the fixed top structure 102 when in a stowed position, and to slide out from the stowed position such that the substantially planar surface 106 is exposed.

The guide structure may be a guide structure of the vehicle center console 100 itself, or the guide structure may be comprised in a separate part.

That the substantially planar surface 106 is exposed means that it is visible and, in a location, where an item may be placed on the surface 106, i.e. the planar component 104 is in a use position, and is not blocked by the top structure 102.

The top structure is fixed meaning that it does not include moving parts that may compromise the arm rest function of the top structure. In other words, the top structure is adapted to be fixed or static in position in a vehicle so that a vehicle occupant may at all times use the top structure as an arm rest. Thus, the fixed top structure may be the arm rest.

The planar component slides in under the fixed top structure for being placed in a stowed position. Thus, in the stowed position the planar component is at least partly covered by the fixed top structure. For example, a larger portion of the planar component is covered by the fixed top structure when the planar component is in the stowed position compared to the portion of the planar component that is covered by the fixed top structure when the planar component is in a use position. The term "under" the fixed top structure relates to a vertical relationship, i.e. the planar component is located vertically below the fixed top structure.

The planar component includes a substantially planar surface. The surface is substantially planar such that it provides for supporting of items thereon without them sliding off the surface or falling over. A small deviation from planar is allowed as long as the surface provides for supporting of items in a similar manner as a table or a tray. The planar component is adapted to have the planar surface substantially horizontal when the vehicle center console is mounted in a vehicle, standing on a substantially horizontal ground.

The stowed position of the planar component may equally well be considered a retracted position or a storage position, generally referring to a position of the planar component in which it is not intended to be fully used or not used at all for placing items thereon.

A use position of the planar component generally relates to a sliding position of the planar component in which the planar component is intended to be used. In other words, the planar component has been withdrawn or pulled out from the stowed position such that an item may be placed on the substantially planar surface of the planar component.

An arm rest may be designed or shaped in various ways and generally provides a structure which a vehicle occupant may use for resting his/her arm or elbow. The shape and design of an arm rest depends on the specific implementation, thus the herein proposed fixed top structure advantageously provides for many possible shapes and designs of an arm rest.

The inventors realized that a fixed top structure provides for an arm rest for the occupants in the seats next to the fixed top structure. The arm rest may be formed to provide a comfortable and ergonomic arm rest that is not affected by moving parts that interfere with an arm rest or even prevent the presence of an arm rest. Further, the inventors realized to provide at least one planar component that is slidable with respect to the fixed top structure. In this way are surfaces provided onto which the vehicle occupants may place items. Thus, embodiments herein provide for an ergonomic arm rest as well as planar components for the occupants to place items on. The herein disclosed embodiments provide for relatively large planar components.

Turning again to fig. 1, the vehicle center console 100 includes fixed side structures 108 and 110 formed in one piece with the top structures 102a and 102b respectively. Here one side structure 108 is formed in one piece with top structure 102a and side structure 110 is formed in one piece with top structure 102b. That the top structure 102 includes two pieces 102a-b, separated by a gap 112 is not strictly required. The top structure 102 may equally well be provided in a single piece, with no gap. The single piece top structure may in such case be formed in one piece with the side structures 108 and 110.

The side structures 110 and 108 are adapted to extend substantially vertically when the vehicle center console 100 is mounted in a vehicle and the vehicle stands on a horizontal ground. The top structures 102a-b forms an angle with the respective side structures 108, 110 such that the top structure provides a top surface 114 that is substantially horizontal, or at least closer to a horizontal orientation than the orientation of the side structures 108 and 110. The side structures 110 and 108 together with the top structure 102 may form a general U-shape, providing a see-through duct 116 in the sliding direction of the planar component 104. The see-through duct 116 forms a tunnel below the planar component 104 and the top structure 102. The planar component 104 may be arranged in the duct 116 at least when in the stowed position.

In some embodiments, the vehicle center console includes a storage compartment below the at least one planar component 104. The storage compartment advantageously allows for storing items therein when travelling with the vehicle. The storage compartment is advantages formed by the duct 116. In other words, the storage compartment is formed by the side structures 108 and 110 and vertically delimited by the at least one planar component 104. The duct 116 may be relatively large, thereby providing for storing relatively large items in the storage compartment 116. The duct is generally air filled such that it may receive items for storage.

The planar component 104 includes the substantially planar surface 106 for receiving items. The surface 106 is delimited by a surrounding rim 118 or edge 118 that assists in maintaining items on the planar surface 106 if the items starts sliding due to violent vehicle motions. In fig. 1, the planar component 104 is shown in a use position, i.e. withdrawn from below the top structure such that items may be placed on the substantially planar surface 106.

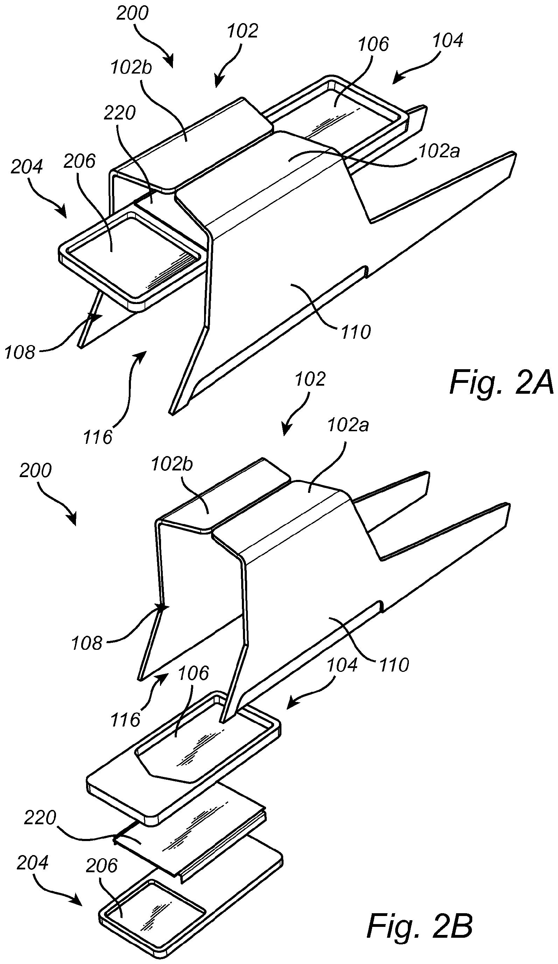

Fig. 2A illustrates a vehicle center console 200 according to the present invention. In addition to the elements described with reference to fig. 1, the vehicle center console 200 comprises a second planar component 204. Accordingly, the planar component 102 is a first planar component 102, wherein the vehicle center console 200 comprises a second planar component 204 adapted to support items placed thereon. The second planar component 204 includes a substantially planar surface 206 for receiving the items. The second planar component 204 is slidably attached to a guide structure to allow for the second planar component 204 to slide in under the fixed top structure 102, 102a, 102b, when in a stowed position, and to slide out from the stowed position such that the substantially planar surface 206 is exposed.

Fig. 2B illustrates an exploded view of the vehicle center console 200. The top structure 102 is the uppermost part of the vehicle center console 200 in a vertical direction. Below the top structure 102 is the first planar component 104 located, here in a stowed position directly below the top structure 102. Next is an attachment member 220 located, interleaved between the first planar component 104 and the second planar component 204 which is located on an opposite side of the sliding mechanism 220 from the first planar component 104. The attachment member attachment member 220 may be fixedly attached to the side structure 108 and 110 and is configured to enable a slidable motion for the first planar component 104 and the second planar component 204 as will be described with reference to subsequent drawings.

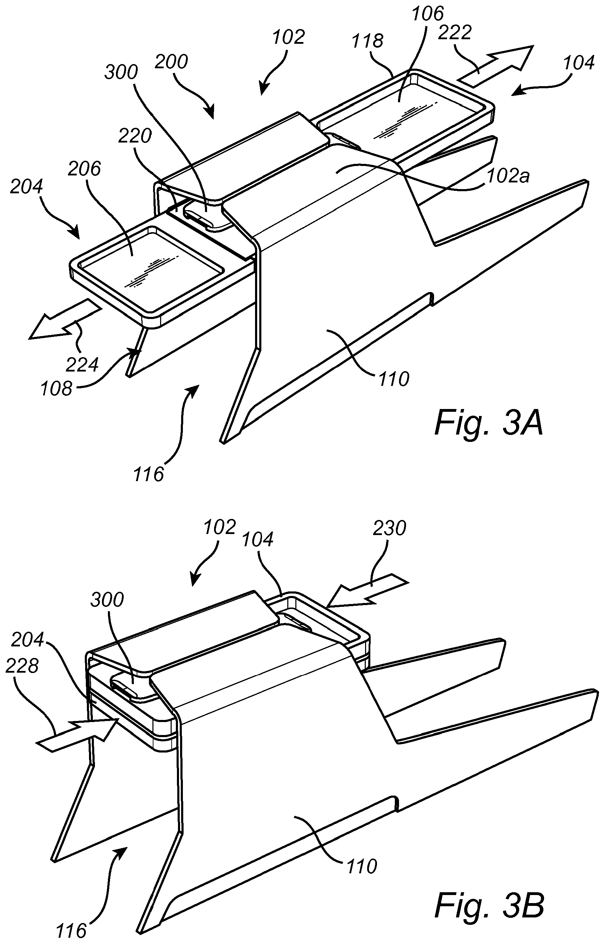

In fig. 3A are the first planar component 104 and the second planar component 204 in their respective use position. The first planar component 104 is withdrawn in a first direction 222 and the second planar component 204 is withdrawn in a second direction 224. The directions 222 and 224 are in opposite directions, i.e. the first planar component 104 and the second planar component 204 are arranged to slide in opposite directions when sliding out from the stowed positions illustrated in fig. 3B to the use position illustrated in fig. 3A. This advantageously provides for planar components on two sides of the top structure 102, i.e. providing two separate planar components that may provide occupants in different parts of the vehicle to place items on a planar component.

The stowed positions of the first planar component 104 and the second planar component 204 are shown in fig. 3B. In the stowed position, one of the first planar component 104 and the second planar component 204 is arranged below the other one of the first planar component 104 and the second planar component 204. In the example embodiment shown in fig. 3A-B, the first planar component 104 is arranged vertically closer to the top structure 102 than the second planar component 204. Thus, in the stowed position of the first planar component 104 and the second planar component 204 shown in fig. 3B, the first planar component 104 is interleaved between the top structure 102 and the second planar component 204.

The first planar component 104 and the first planar component 204 are arranged in the duct 116 at least when in the stowed position shown in fig. 3B. The duct 116 may further be a storage compartment for storing larger items such as suit cases and shopping bags.

The first planar component 104 may be arranged to slide forward in the vehicle heading direction when sliding out from the stowed position and towards a use position. Thus, the first planar component 104 may provide a surface 106 for a vehicle occupant in the front parts of the vehicle to place items on.

Further, the second support 204 structure may be arranged to slide rearwards, opposite the vehicle heading direction when sliding out from the stowed position and towards a use position. Thus, the second planar component 204 may advantageously provide a surface 206 for a vehicle occupant in the rear parts of the vehicle to place items on.

The heading direction is parallel to the travelling direction of the vehicle when the vehicle is travelling forward.

The guide structures may be provided as part of the side structures 108 and 110, i.e. as guiding rails in the side structures that engages slidably with rails or side protrusions or side ridges of the planar components 104 and 204.

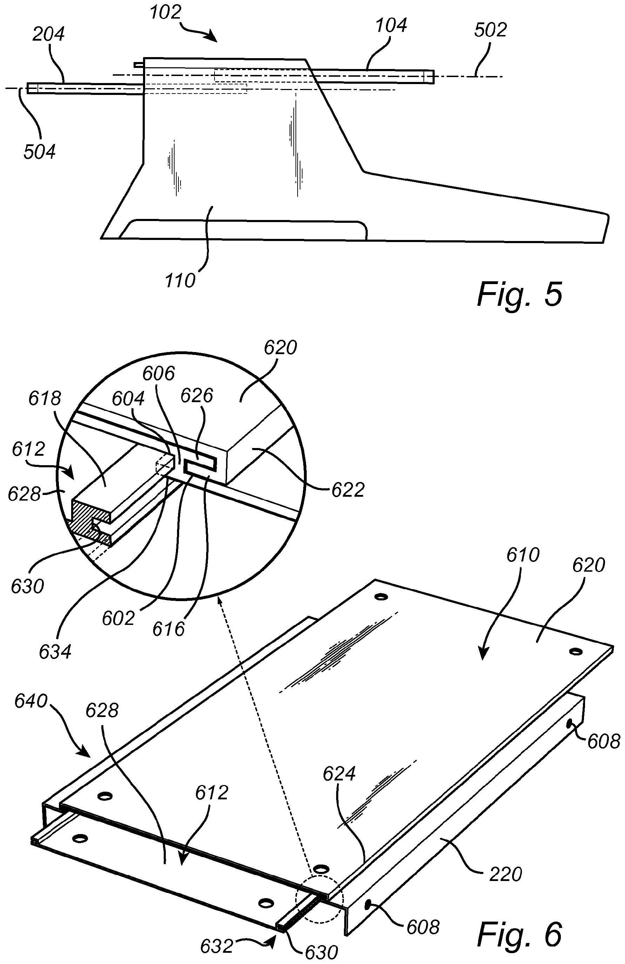

Another possibility for providing guide structures is to provide an attachment member 220 fixedly attachable with respect to the fixed top structure 102, the attachment member includes the guide structures for providing the sliding motion of the first planar component 104 and the sliding motion of the second planar component 204. An example attachment member 220 will be described in more detail with reference to fig. 6. The attachment member 220 provides for a convenient way for providing a sliding motion capability for both the planar components 104 and 204.

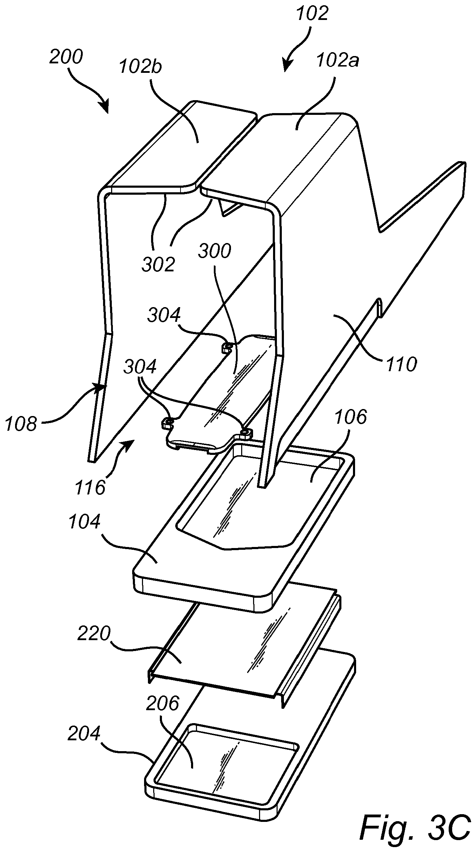

Turning now to fig. 3C, in some embodiments, the fixed top structure 102 may include an attachment surface 302 configured for the attachment of an electronics unit 300 thereon, the attachment surface 302 is located facing the first planar component 104 at least when in the stowed position. Accordingly, for enhanced user experience, an electronics unit 300 that may serve as a control panel for controlling various functions of the vehicle, e.g. included in an entertainment system or a climate control system, may be attached to the vehicle center console 200. The electronics unit may be attached to the attachment surface 302 using e.g. screws inserted through the though holes 304 of the electronics unit 300 and tightened to the attachment surface 302.

The location of the electronics unit 300 in the vehicle center console 200 provides for convenient access to the electronics unit 300 for occupants seated on both sides of the vehicle center console 200, that is, both to the left and to the right of the vehicle center console 200, thereby providing for improved access and user-friendliness for controlling functions in the vehicle.

The electronics unit 300 may be included in the vehicle center console 200.

In fig. 3C illustrating an exploded view of the vehicle center console 200 including the electronics unit 300, the electronics unit 300 is located directly below the top structure 102, e.g. attached to the attachment surface 302 which is the surface on the opposite side of the top structure 102 relative the upper surface of the top structure 102. The first planar component 104 is located directly below the electronics unit 300, slidably attached to the attachment member 220. The attachment member 220 is located in between the first planar component 104 and the second planar component 204.

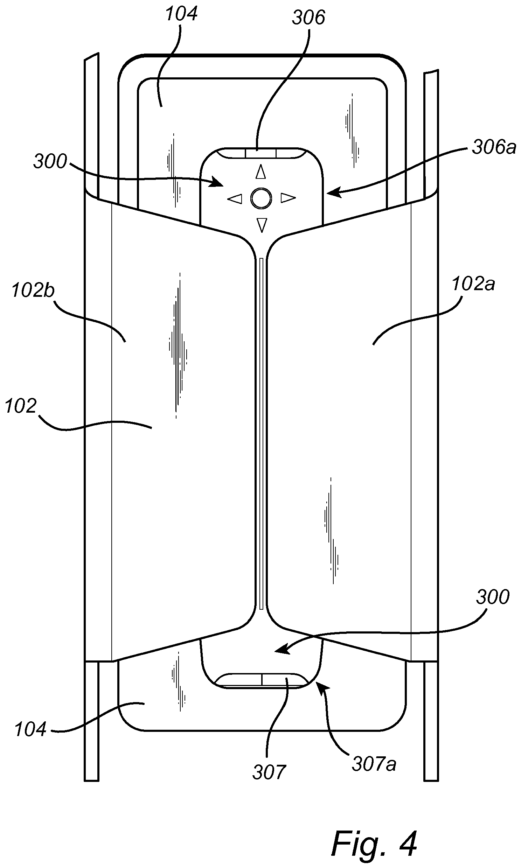

Fig. 4 is a top view of the vehicle center console 200 including the electronics unit 300. The electronics unit 300 includes at least one input device 306 to receive input from a user for controlling electric sub-systems of the vehicle such as a climate control system or an entertainments system. In some embodiments, the electronics unit 300 includes a first input device 306 arranged at a first side 306a of the electronics unit and a second input device 307 arranged at a second side 307a of the electronics unit 300, the first side being arranged in front of the fixed top structure 102 in the vehicle heading direction, and the second side being arranged rearwards of the fixed top structure 102. In other words, the electronics unit 300 is adapted to extend beyond the fixed top structure 102 rearwards, and to extend to in front of the fixed top structure 102 forwards. This provides convenient access to the first input device 306 for vehicle occupants in the front seats, and for convenient access to the second input device 306 of the same electronics unit 300 for vehicle occupants in the rear seats.

Fig. 5 is a side-view of the vehicle center console 200. The first planar component 104 is arranged in a first plane 502 and the second planar component 204 is arranged in a second plane 504. The first plane 502 is spatially separate from the second plane 504, in other words, the first plane 502 and the second plane may not intersect in at least some possible implementations of embodiments of the present invention. Further, first planar component 104 is arranged to slide in the first plane 502, when the first planar component 104 is displaced from a use position to a stowed position or vice versa. The second planar component 104 is arranged to slide in the second plane 504, when the second planar component 204 is displaced from a use position to a stowed position or vice versa. The first plane 502 is preferably parallel with the second plane 504. The first plane 502 and the second plane 504 are preferably horizontal, when the vehicle center console is arranged in a vehicle.

Fig. 6 conceptually illustrates an example attachment member 220 for providing a sliding mechanism for the first and second planar components. The attachment member 220 includes a guiding structure in the form of a guiding trace 602 or groove for providing the sliding motion for the first planar component. The attachment member 220 further includes an additional guiding structure in the form of a guiding trace 604 for providing the sliding motion of the second planar component. The guiding traces 602 and 604 are arranged on opposite sides, in other words, the guiding trace 602 provides a sliding motion for the first planar component arranged on one side of the attachment member, and the guiding trace 604 provides a sliding motion for the second planar component arranged on the other side of the attachment member 220. The guiding traces 602 and 604 are parallel with each other. In this example embodiment, the guiding traces 602 and 604 share an inner wall 606 that separates the guiding rails 602, 604.

The attachment member 220 includes fastening holes 608 for attaching the attachment member 220 to the side structures 108 and 110 of the vehicle center console. Here, only the holes 608 on one side are shown, but there are of course holes on the opposite side of the attachment member, such that the attachment member 220 may be attached to both side structures 108 and 110. Further, a first mounting structure 610 and a second mounting structure 612 are included for attaching the first planar component and the second planar component respectively thereon. Thus, in this example embodiment, the first mounting structure 610 includes a matching guiding rail 616 or flange that is adapted to slide in the first guiding trace 602 of the attachment member 220, the second mounting structure 612 includes a matching guiding rail 618 or flange that is adapted to slide in the second guiding trace 604 of the attachment member 220. The rails 616 and 618 are thus adapted to slide along the guiding traces 602 and 604 respectively. The first mounting structure 610 may be included in the first planar component and the second mounting structure 612 may be included in the second planar component. In other possible implementations, the first planar component includes the rails 616, and the second planar component includes the rails 618.

The guiding rails 616 and 618 may be formed in various ways. Here, the guiding rail 616 of the first mounting structure is one flange of a U-shaped structure seen in a cross-section of the first mounting structure 610. The first mounting structure 610 includes a planar main body 620 and a side wall portion 622 that extends away from the plane of the main body 620 at the edge 624 of the main body 620. The guiding rail 616 extends as a flange away from the side wall portion 622 in at an angle, preferably orthogonally from the side wall 622. The guiding rail 616 or flange, the side wall 622, and the main body 620 forms a trace in which one flange 626 that forms the guiding trace 602 of the attachment member 220 may engage. The rail 616 or flange is preferably parallel with the main plane of the main body 620.

In the same way, the guiding rail 618 of the second mounting structure is one flange of a U-shaped structure seen in a cross-section of the second mounting structure 612. The second mounting structure 612 includes a planar main body 628 and a side wall portion 630 near the edge 632 of the main body 620, the side wall portion 630 is generally perpendicular to the main body 628. The guiding rail 618 extends away from the side wall portion 630 as a flange at an angle, preferably orthogonally from the side wall portion 630. The guiding rail 618 or flange, the side wall 630, and the main body 628 forms a trace in which one flange 643 that forms the guiding trace 604 of the attachment member 220 may engage. The rail 618 or flange is preferably parallel with the main plane of the main body 628.

In other words, the sliding engagement between the first mounting structure 610 and the attachment member 220 may be formed by a U-shape in the first mounting structure 610 that engages with a first U-shape in the attachment member 220. In addition, the sliding engagement between the second mounting structure 612 and the attachment member 220 may be formed by a U-shape in the second mounting structure 612 that engages with a second U-shape in the attachment member 220.

In the above description of the example attachment member the rails and traces along one side of the attachment member and mounting structures are shown. However, as is understood to the skilled person, similar structures that are parallel to the rails and traces described with reference to fig. 6 are present along the opposite side 640 of the attachment member and mounting structures.

The attachment member described with reference to fig. 6 provides one example attachment member. Other possible implementations include telescopic holding beams or rails that are supported on rollers for providing the sliding motion, or beams or rails that are arranged to roll on rollers. For this, beams or rails may be attached directly or indirectly to the first planar component and the second planar component, respectively, and supporting beams or rails may be attached the side structures of the vehicle center console. The supporting beams or rails may hold rollers that provide for the beams on the first planar component and the second planar component to roll thereon, to in this way provide for the first planar component and the second planar component to slide between the stowed position and a use position.

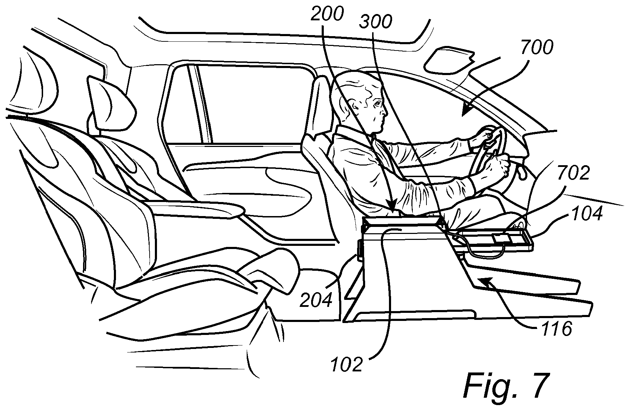

Fig. 7 conceptually illustrates a vehicle 700 including a vehicle center console 200 according to embodiments of the present invention. Here, a mobile phone 702 is shown on the first planar component, e.g. the tray 104, in a use position. The mobile phone is connected to the control panel 300 e.g. for charging. The duct 116 is shown which forms a storage compartment for larger items, e.g. shopping bags, suit cases, carry-on luggage etc. A second planar component, e.g. tray 204 is shown in a stowed position. In a use position, second planar component 204 is easily accessible to vehicle occupants in the rear seat.

The planar component 104 and 204 are sufficiently rigid for supporting e.g. handheld items thereon. More specifically, the planar component 104 and 204 may generally be provided as trays or tables configured to support items placed in the trays or tables. The planar components may be made from biologically compatible materials such as bio-composites including natural fiber polypropylene (NFPP) and reinforced flax. The planar components may be made from polymers or other relatively rigid materials suitable for trays and tables. The planar components may for example be made by molding or 3D-printing.

The planar components may be generally rectangular providing for a somewhat elongated shape such that the planar surface may reach a distance forward/rearward in the vehicle in the use position.

The side structures and top structure may be made from biologically compatible materials such as bio-composites including natural fiber polypropylene (NFPP) and reinforced flax. Other possible materials for the side structures and top structure include polymers or other relatively rigid materials.

There is further provided a vehicle comprising any one of the herein disclosed vehicle center consoles.

There is further provided an electronics unit comprising at least one input device to receive input from a user for controlling electric sub-systems of the vehicle, the electronics unit is adapted to be attached to a vehicle center console including a fixed top structure providing an arm rest for vehicle occupants, and at least one planar component adapted to support items placed thereon, the planar component including a substantially planar surface for receiving the items, wherein the planar component is slidably attached to a guide structure to allow for the planar component to slide in under the fixed top structure when in a stowed position, and to slide out from the stowed position such that the substantially planar surface is exposed, wherein the electronics unit includes attachment portions for attaching the electronics unit to an attachment surface of the fixed top structure the attachment surface is located facing the planar component at least when in the stowed position.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

Various examples have been described. These and other examples are within the scope of the following claims.

## Claims

1. A vehicle center console (100;200) comprising:
a fixed top structure (102) providing an arm rest for vehicle occupants,
at least a first planar component (102) comprising a substantially planar surface (106) adapted to be substantially horizontal when the vehicle center console is mounted in a vehicle, wherein the first planar component is slidably attached to a guide structure to allow for the first planar component to slide in under the fixed top structure when in a stowed position, and to slide out from the stowed position such that the substantially planar surface is exposed; and
a second planar component (204) comprising a substantially planar surface (206) adapted to be substantially horizontal when the vehicle center console is mounted in a vehicle, wherein the second planar component is slidably attached to a guide structure to allow for the second planar component to slide in under the fixed top structure when in a stowed position, and to slide out from the stowed position such that the substantially planar surface is exposed,
an attachment member (220) fixedly attachable with respect to the fixed top structure, the attachment member includes the guide structures for providing the sliding motion of the first planar component and the sliding motion of the second planar component.

2. The vehicle center console according to claim 1, wherein the first planar component and the second planar component are arranged to slide in opposite directions when sliding out from the stowed positions.

3. The vehicle center console according to any one of the preceding claims, wherein the first planar component is arranged to slide forward in the vehicle heading direction when sliding out from the stowed position.

4. The vehicle center console according to any one of the preceding claims, wherein the second planar component is arranged to slide rearwards, opposite the vehicle heading direction, when sliding out from the stowed position.

5. The vehicle center console according to any one of the preceding claims, wherein, when in the stowed position, one of the first planar component and the second planar component is arranged below the other one of the first planar component and the second planar component.

6. The vehicle center console according to any one of the preceding claims, wherein, the first planar component and the second planar component are arranged to slide in different planes (502, 504).

7. The vehicle center console according to claim 1, wherein the attachment member is adapted to be arranged interleaved between the first planar component and the second planar component.

8. The vehicle center console according to claim 1, wherein a first guide structure is arranged on a first side of the attachment member facing towards the fixed top structure, and a second guide structure is arranged on a second side of the attachment member, wherein the first guide structure and the second guide structure provides for guiding motions in separate planes.

9. The vehicle center console according to any one of the preceding claims, including a storage compartment (116) below the planar component(s).

10. The vehicle center console according to any one of the preceding claims, comprising side structures (108, 110) forming a see-through duct (116) in the sliding direction of the planar component.

11. The vehicle center console according to claim 10, wherein the planar component(s) is/are arranged in the duct at least when in the stowed position.

12. The vehicle center console according to any one of claims 9 and 11, wherein the storage compartment is formed in the duct.

13. The vehicle center console according to any one of the preceding claims, wherein the fixed top structure includes an attachment surface (302) configured for the attachment of an electronics unit (300) thereon, the attachment surface is located facing the planar component at least when in the stowed position.

## Patentansprüche

1. Fahrzeugmittelkonsole (100; 200), umfassend:
eine feststehende obere Struktur (102), die eine Armlehne für Fahrzeuginsassen bereitstellt,
mindestens eine erste planare Komponente (102), die eine im Wesentlichen planare Fläche (106) umfasst, die derart ausgelegt ist, dass sie im Wesentlichen horizontal ist, wenn die Fahrzeugmittelkonsole in ein Fahrzeug eingebaut ist, wobei die erste planare Komponente gleitend an einer Führungsstruktur befestigt ist, um zu ermöglichen, dass die erste planare Komponente unter die feststehende obere Struktur hineingleitet, wenn sie sich in einer verstauten Position befindet, und aus der verstauten Position herausgleitet, so dass die im Wesentlichen planare Fläche freiliegt; und
eine zweite planare Komponente (204), die eine im Wesentlichen planare Fläche (206) umfasst, die derart ausgelegt ist, dass sie im Wesentlichen horizontal ist, wenn die Fahrzeugmittelkonsole in ein Fahrzeug eingebaut ist, wobei die zweite planare Komponente gleitend an einer Führungsstruktur befestigt ist, um zu ermöglichen, dass die zweite planare Komponente unter die feststehende obere Struktur hineingleitet, wenn sie sich in einer verstauten Position befindet, und aus der verstauten Position herausgleitet, so dass die im Wesentlichen planare Fläche freiliegt,
ein Befestigungselement (220), das in Bezug auf die feststehende obere Struktur feststehend befestigbar ist, wobei das Befestigungselement die Führungsstrukturen zum Bereitstellen der Gleitbewegung der ersten planaren Komponente und der Gleitbewegung der zweiten planaren Komponente beinhaltet.

2. Fahrzeugmittelkonsole nach Anspruch 1, wobei die erste planare Komponente und die zweite planare Komponente derart angeordnet sind, dass sie in entgegengesetzte Richtungen gleiten, wenn sie aus den verstauten Positionen herausgleiten.

3. Fahrzeugmittelkonsole nach einem der vorhergehenden Ansprüche, wobei die erste planare Komponente derart angeordnet ist, dass sie in der Fahrzeugfahrtrichtung nach vorn gleitet, wenn sie aus der verstauten Position herausgleitet.

4. Fahrzeugmittelkonsole nach einem der vorhergehenden Ansprüche, wobei die zweite planare Komponente derart angeordnet ist, dass sie entgegengesetzt zur Fahrzeugfahrtrichtung nach hinten gleitet, wenn sie aus der verstauten Position herausgleitet.

5. Fahrzeugmittelkonsole nach einem der vorhergehenden Ansprüche, wobei, wenn sie sich in der verstauten Position befindet, eine der ersten planaren Komponente und der zweiten planaren Komponente unterhalb der anderen der ersten planaren Komponente und der zweiten planaren Komponente angeordnet ist.

6. Fahrzeugmittelkonsole nach einem der vorhergehenden Ansprüche, wobei die erste planare Komponente und die zweite planare Komponente derart angeordnet sind, dass sie in unterschiedlichen Ebenen (502, 504) gleiten.

7. Fahrzeugmittelkonsole nach Anspruch 1, wobei das Befestigungselement dazu ausgelegt ist, verschachtelt zwischen der ersten planaren Komponente und der zweiten planaren Komponente angeordnet zu sein.

8. Fahrzeugmittelkonsole nach Anspruch 1, wobei eine erste Führungsstruktur auf einer ersten Seite des Befestigungselements angeordnet ist, die der feststehenden oberen Struktur zugewandt ist, und eine zweite Führungsstruktur auf einer zweiten Seite des Befestigungselements angeordnet ist, wobei die erste Führungsstruktur und die zweite Führungsstruktur Führungsbewegungen in separaten Ebenen bereitstellen.

9. Fahrzeugmittelkonsole nach einem der vorhergehenden Ansprüche, die ein Aufbewahrungsfach (116) unterhalb der planaren Komponente(n) beinhaltet.

10. Fahrzeugmittelkonsole nach einem der vorhergehenden Ansprüche, die Seitenstrukturen (108, 110) umfasst, die durchsichtige Kanäle (116) in der Gleitrichtung der planaren Komponente bilden.

11. Fahrzeugmittelkonsole nach Anspruch 10, wobei die planare(n) Komponente(n) zumindest in der verstauten Position in dem Kanal angeordnet ist/sind.

12. Fahrzeugmittelkonsole nach einem der Ansprüche 9 und 11, wobei das Aufbewahrungsfach in dem Kanal gebildet ist.

13. Fahrzeugmittelkonsole nach einem der vorhergehenden Ansprüche, wobei die feststehende obere Struktur eine Befestigungsfläche (302) umfasst, die zur Befestigung einer Elektronikeinheit (300) daran ausgestaltet ist, wobei die Befestigungsfläche zumindest in der verstauten Position der planaren Komponente zugewandt angeordnet ist.

## Revendications

1. Console centrale (100 ; 200) de véhicule comportant :
une structure supérieure fixe (102) constituant un accoudoir pour des occupants du véhicule, au moins un premier composant plan (102) comportant une surface sensiblement plane (106) prévue pour être sensiblement horizontale lorsque la console centrale de véhicule est montée dans un véhicule, le premier composant plan étant en liaison glissière avec une structure de guidage pour permettre au premier composant plan d'entrer par coulissement sous la structure supérieure fixe lorsqu'il est dans une position escamotée, et de sortir par coulissement de la position escamotée de telle façon que la surface sensiblement plane soit exposée ; et
un second composant plan (204) comportant une surface sensiblement plane (206) prévu pour être sensiblement horizontal lorsque la console centrale de véhicule est monté dans un véhicule, le second composant plan étant en liaison glissière avec une structure de guidage pour permettre au second composant plan d'entrer par coulissement sous la structure supérieure fixe lorsqu'il est dans une position escamotée, et de sortir par coulissement de la position escamotée de telle façon que la surface sensiblement plane soit exposée, un élément (220) de fixation pouvant être fixé de manière immobile par rapport à la structure supérieure fixe, l'élément de fixation comprenant les structures de guidage destinées à assurer le mouvement de coulissement du premier composant plan et le mouvement de coulissement du second composant plan.

2. Console centrale de véhicule selon la revendication 1, le premier composant plan et le second composant plan étant agencés pour coulisser dans des sens opposés lorsqu'ils sortent par coulissement des positions escamotées.

3. Console centrale de véhicule selon l'une quelconque des revendications précédentes, le premier composant plan étant agencé pour coulisser vers l'avant dans la direction d'orientation du véhicule lorsqu'il sort par coulissement de la position escamotée.

4. Console centrale de véhicule selon l'une quelconque des revendications précédentes, le second composant plan étant agencé pour coulisser vers l'arrière, à l'opposé de la direction d'orientation du véhicule, lorsqu'il sort par coulissement de la position escamotée.

5. Console centrale de véhicule selon l'une quelconque des revendications précédentes, lorsqu'ils sont dans la position escamotée, un composant parmi le premier composant plan et le second composant plan étant agencé au-dessous de l'autre composant parmi le premier composant plan et le second composant plan.

6. Console centrale de véhicule selon l'une quelconque des revendications précédentes, le premier composant plan et le second composant plan étant agencés pour coulisser dans des plans (502, 504) différents.

7. Console centrale de véhicule selon la revendication 1, l'élément de fixation étant prévu pour être agencé intercalé entre le premier composant plan et le second composant plan.

8. Console centrale de véhicule selon la revendication 1, une première structure de guidage étant agencée d'un premier côté de l'élément de fixation orienté vers la structure supérieure fixe, et une seconde structure de guidage étant agencée d'un second côté de l'élément de fixation, la première structure de guidage et la seconde structure de guidage permettant de guider les mouvements dans des plans séparés.

9. Console centrale de véhicule selon l'une quelconque des revendications précédentes, comprenant un compartiment (116) de rangement au-dessous du ou des composants plans.

10. Console centrale de véhicule selon l'une quelconque des revendications précédentes, comportant des structures latérales (108, 110) formant un conduit transparent (116) dans la direction de coulissement du composant plan.

11. Console centrale de véhicule selon la revendication 10, le ou les composants plans étant agencés dans le conduit au moins lorsqu'ils sont dans la position escamotée.

12. Console centrale de véhicule selon l'une quelconque des revendications 9 et 11, le compartiment de rangement étant formé dans le conduit.

13. Console centrale de véhicule selon l'une quelconque des revendications précédentes, la structure supérieure fixe comprenant une surface (302) de fixation configurée pour la fixation d'une unité (300) d'électronique sur celle-ci, la surface de fixation étant située face au composant plan au moins lorsqu'il est dans la position escamotée.
